# EUROPÄISCHE PATENTSCHRIFT

(11) **EP 3 296 497 B1**
(45) Veröffentlichungstag und Bekanntmachung des Hinweises auf die Patenterteilung: **14.08.2024**
(21) Anmeldenummer: 17191528.3
(22) Anmeldetag: 18.09.2017
(51) Int. Cl.: E05D 15/10, E05F 15/655

(54) **SCHWENKSCHIEBETÜRANORDNUNG FÜR EIN FAHRZEUG**
PIVOT SLIDING DOOR ASSEMBLY FOR A VEHICLE
DISPOSITIF FORMANT PORTE LOUVOYANTE-COULISSANTE POUR UN VÉHICULE

(30) Priorität: 19.09.2016 DE 202016105214 U
(43) Veröffentlichungstag der Anmeldung: 21.03.2018
(73) Patentinhaber: Bode - Die Tür GmbH, 34123 Kassel (DE)
(72) Erfinder: Gibhardt, Nils, 34281 Gudensberg (DE)
(74) Vertreter: Patentanwälte Bauer Vorberg Kayser

(56) Entgegenhaltungen:
- CH-A- 458 111
- DE-A1- 102004 045 072
- DE-A1- 2 111 911
- FR-A1- 2 814 489

## Beschreibung

Die Erfindung betrifft eine Schwenkschiebetüranordnung für ein Fahrzeug mit den Merkmalen des Oberbegriffs von Anspruch 1.

Es hat sich herausgestellt, dass bei Schwenkschiebetüren im geschlossenen Zustand die Türflügel auch gegenüber einer Bewegung in vertikaler Richtung, welche vertikale Richtung auch als Z-Richtung bezeichnet wird, fixiert werden sollten. Im Fahrbetrieb können regelmäßig Schwingungen entstehen, welche auch den Türflügel in Z-Richtung schwingen lassen.

Ein möglicher Ansatz der Fixierung des Türflügels in Z-Richtung sieht dabei vor, dass an einem unteren Drehsäulenlager der Schwenkschiebetür eine waagrechte Nut vorgesehen ist, welche entlang einer Verschieberichtung des Türflügels der Schwenkschiebetür verläuft. Beim Schließen der Tür fährt ein am Türflügel befestigter Einlaufkeil in diese Nut ein, sodass Schwingungen des Türflügels in Z-Richtung blockiert werden. Diese Verschieberichtung entspricht regelmäßig einer Fahrtrichtung bzw. einer Längsrichtung des Fahrzeugs, weswegen sie hier und nachfolgend auch als Y-Richtung bezeichnet wird.

Nachteilig an diesem Ansatz ist jedoch, dass Schwingungen des Türflügels sowohl in der Y-Richtung des Türflügels als auch in einer X-Richtung, welche X-Richtung zu dieser Y-Richtung und zu der Z-Richtung senkrecht ist, dazu führen können, dass der oben beschriebene Eingriff zwischen dem Einlaufkeil und der Nut zur Fixierung des Türflügels in Z-Richtung wieder gelöst wird. Diese Situation kann insbesondere während des Fahrbetriebs des Fahrzeugs zu Schäden an der Schwenkschiebetür oder an ihrem Antrieb führen.

Die CH 458 111 A aus dem Stand der Technik zeigt einen Schiebetür-Betätigungsmechanismus für einen in die und aus der Öffnung in einer vertikalen Wand beweglichen Türflügel, gekennzeichnet durch waagrechte Führungen die an der Wand oberhalb und unterhalb der Öffnung angeordnet sind sowie durch sich vertikal erstreckende Betätigungsorgane umfassend eine Hohlwelle, die am Türflügel angebracht ist und um eine vertikale Achse drehbar ist.

Die DE 21 11 911 A1 aus dem Stand der Technik zeigt eine Schwenk- und Verriegelungseinrichtung für Laderaumtüren von Kühlwagen, welche aus die Laderaumtür tragenden, paarig angeordneten und seitlich verfahrbaren Schwenkwellen und mit den Schwenkwellen kombinierten Verriegelungswellen zum Anpressen und Abdrücken der Tür an bzw. von deren Dichtungen besteht, dadurch gekennzeichnet, dass die in bekannter Weise als Hohlwelle mit nockenartigen Hebeln ausgebildeten Verriegelungswellen an ihren unteren Enden gegen Verdrehen gesicherte Indexscheiben tragen.

Die FR 2 814 489 A1 aus dem Stand der Technik, von welcher die vorliegende Erfindung ausgeht, zeigt eine Schiebtür, welche auf Rollen an oberen und unteren Führungsschienen läuft. Die Schienen sind von außen unsichtbar im Innenraum untergebracht. Die Schiebtür kann relativ zu zwei Rollenträgerwagen gleiten, die in die Schienen eingreifen.

Die DE 10 2004 045 072 A1 aus dem Stand der Technik, von welcher die vorliegende Erfindung ausgeht, offenbart eine Schwenktür umfassend mindestens einen Türflügel, wobei der mindestens eine Türflügel im Bereich der Nebenschließkante an einer Drehsäule angelenkt ist, wobei die Drehsäule zur Verbindung mit dem Türflügel mindestens einen Schwenkarm aufweist, wobei bei Drehung der Drehsäule ein Finger in den Bereich der Nebenschließkante des Türflügels bringbar ist, wobei bei geschlossenem Türflügel durch den Finger die Bewegung des Türflügels in Richtung der Fahrzeuglängsachse blockiert ist.

Vor diesem Hintergrund besteht die Aufgabe der Erfindung darin, eine Schwenkschiebetüranordnung bereitzustellen, welche auf kostengünstige und zuverlässige Weise gegen ein Lösen ihrer Z-Fixierung gesichert ist.

Bezogen auf eine Schwenkschiebetüranordnung für ein Fahrzeug mit den Merkmalen des Oberbegriffs von Anspruch 1 wird diese Aufgabe durch die Merkmale des kennzeichnenden Teils von Anspruch 1 gelöst.

Wesentlich für die Erfindung ist die Erkenntnis, dass an dem Drehsäulenhebel, welcher die Drehsäule mit dem Türflügel zum Ausstellen des Türflügels bei Entriegelung der Schwenkschiebetür koppelt, eine Vorrichtung vorgesehen sein kann, welche in einer Schließstellung des Türflügels in der Y-Richtung den Türflügel fixiert. Auf diese Weise wird also eine Bewegung des Türflügels in der Y-Richtung unterbunden, sodass ein Lösen der Z-Fixierung durch Bewegungen in der Y-Richtung verhindert wird.

Die erfindungsgemäße Schwenkschiebetüranordnung ist für ein Fahrzeug bestimmt, wobei es sich insbesondere um ein Fahrzeug des öffentlichen Personenverkehrs handeln kann. Die vorschlagsgemäße Schwenkschiebetüranordnung weist einen Türflügel zum Öffnen und Verschließen einer Türöffnung und eine Drehsäulenanordnung zum Verstellen des Türflügels zwischen einer Schließstellung und einer Verschiebestellung auf. Vorschlagsgemäß weist dabei die Drehsäulenanordnung eine zum Verstellen des Türflügels schwenkbare Drehsäule und einen Drehsäulenhebel zum Koppeln der Drehsäule mit dem Türflügel auf, wobei der Türflügel ein Linearlager aufweist. Vorschlagsgemäß greift in das Linearlager ein Führungselement des Drehsäulenhebels zur Linearführung des Türflügels in eine Verschieberichtung ein, wobei der Türflügel in der Schließstellung die Türöffnung verschließt und in der Verschiebestellung zum Öffnen der Türöffnung entlang der Verschieberichtung verschoben werden kann. Dabei kann es sein, dass bei bestimmten Positionen der Verschiebung des Türflügels entlang der Verschieberichtung eine Verstellung des Türflügels in die Schließstellung nicht möglich ist. Mit anderen Worten kann es sein, dass nur in einer oder mehr bestimmten Positionen der Verschiebung des Türflügels entlang der Verschieberichtung durch die Drehsäulenanordnung der Türflügel in die Schließstellung verstellt werden kann. Bezüglich des Linearlagers und des Führungselements ließe sich auch feststellen, dass das Linearlager des Türflügels und das Führungselement des Drehsäulenhebels eine Linearführung bilden.

Die erfindungsgemäße Schwenkschiebetüranordnung ist dadurch gekennzeichnet, dass der Drehsäulenhebel eine Y-Fixierungsvorrichtung aufweist, welche zum Fixieren des Türflügels in der Verschieberichtung mit dem Türflügel in der Schließstellung des Türflügels in Eingriff steht. Mit anderen Worten bewirkt der Eingriff der Y-Fixierungsvorrichtung des Drehsäulenhebels mit dem Türflügel, dass eine Relativbewegung des Türflügels zu der Drehsäulenanordnung in der Verschieberichtung verhindert wird. Vorzugsweise bilden die Y-Fixierungsvorrichtung und der Türflügel einen Formschluss in Verschieberichtung durch den Eingriff. Dieses Verhindern der Bewegung kann eine Bewegung entlang einer ersten Ausrichtung der Verschieberichtung oder entlang einer zweiten, der ersten Ausrichtung entgegengesetzten Ausrichtung der Verschieberichtung betreffen. Sofern die Verschieberichtung also durch einen Vektor definiert wird, kann das Verhindern entweder eine zu diesem Vektor parallele oder eine zu diesem Vektor antiparallele Bewegung betreffen.

Eine bevorzugte Ausführungsform ist dadurch gekennzeichnet, dass die Verschieberichtung bezogen auf das Fahrzeug horizontal verläuft. Hier kann es insbesondere sein, dass die Verschieberichtung kollinear zu einer Fahrtrichtung des Fahrzeugs verläuft. Entsprechend umfasst dies sowohl eine zu der Fahrtrichtung parallele als auch eine zu der Fahrtrichtung antiparallele Ausrichtung der Verschieberichtung. Die Verschieberichtung kann - wie obenstehend bereits erwähnt - auch als Y-Richtung bezeichnet werden.

Die erfindungsgemäße Schwenkschiebetüranordnung ist weiter dadurch gekennzeichnet, dass die Y-Fixierungsvorrichtung in der Verschiebestellung des Türflügels außer Eingriff mit dem Türflügel steht. Dabei ist vorgesehen, dass die Y-Fixierungsvorrichtung durch Verschwenken der Drehsäule mit dem Türflügel wechselweise in und außer Eingriff gebracht werden kann, wobei das Verschwenken der Drehsäule den Drehsäulenhebel betätigt, sodass die Y-Fixierungsvorrichtung mit dem Türflügel wechselweise in und außer Eingriff gebracht wird. Dabei kann es weiter sein, dass nur in denjenigen Positionen der Verschiebung des Türflügels entlang der Verschieberichtung, in welchen der Türflügel durch die Drehsäulenanordnung in die Schließstellung verstellt werden kann, die Y-Fixierungsvorrichtung durch Verschwenken der Drehsäule mit dem Türflügel in Eingriff gebracht werden kann.

Gemäß einer bevorzugten Ausführungsform ist vorgesehen, dass die Drehsäulenanordnung eine Z-Fixierungsvorrichtung aufweist, welche zum Begrenzen einer Bewegung des Türflügels in einer Z-Richtung quer zu der Verschieberichtung mit dem Türflügel in der Schließstellung des Türflügels in Eingriff kommt. Dabei ist es bevorzugt, dass die Z-Richtung bezogen auf das Fahrzeug vertikal verläuft. Prinzipiell kommen eine beliebige Ausrichtung oder beide Ausrichtungen dieses vertikalen Verlaufs für die Ausrichtung des Eingriffs infrage. Bevorzugt ist jedoch, dass die Z-Fixierungsvorrichtung zum Begrenzen einer Bewegung des Türflügels in einer oberen Z-Richtung und einer unteren Z-Richtung mit dem Türflügel in Eingriff kommt. Dabei kann dieser Eingriff wechselweise erfolgen und dies insbesondere in Abhängigkeit von den Schwingungen, die der Türflügel erfährt. Vorzugsweise entspricht dieses Begrenzen einer Bewegung des Türflügels einem ggf. spielbehafteten Fixieren des Türflügels.

Grundsätzlich kann die obige Z-Fixierungsvorrichtung separat und unabhängig zu der Y-Fixierungsvorrichtung ausgestaltet sein. Eine diesbezüglich bevorzugte Ausführungsform ist jedoch dadurch gekennzeichnet, dass die Y-Fixierungsvorrichtung die Z-Fixierungsvorrichtung umfasst. Die Y-Fixierungsvorrichtung kann auch identisch zu der Z-Fixierungsvorrichtung sein. Insbesondere kann es sein, dass der Eingriff der Y-Fixierungsvorrichtung mit dem Türflügel den Türflügel in der Z-Richtung fixiert.

Eine weitere bevorzugte Ausführungsform ist dadurch gekennzeichnet, dass die Drehsäulenanordnung eine X-Andrückvorrichtung aufweist, welche mit dem Türflügel in der Schließstellung des Türflügels zum Andrücken des Türflügels entlang einer X-Richtung in Eingriff steht. Prinzipiell kann es sich bei dieser X-Richtung um eine beliebige Richtung handeln. Bevorzugt ist es jedoch, dass die X-Richtung senkrecht zu der Verschieberichtung und senkrecht zu der Z-Richtung verläuft. Weiter kann es sein dass die X-Richtung bezogen auf das Fahrzeug horizontal verläuft. Bei der X-Richtung kann es sich also um eine horizontale Richtung handeln, welche quer zu der Y-Richtung verläuft. Dabei kann die Y-Fixierungsvorrichtung auch die X-Andrückvorrichtung umfassen oder aus ihr bestehen.

Weiter ist es bevorzugt, dass das Linearlager an einem unteren Ende des Türflügels angeordnet ist. Entsprechend handelt es sich dann bei dem Drehsäulenhebel um einen unteren Drehsäulenhebel.

Gemäß einer bevorzugten Ausführungsform ist vorgesehen dass die Schwenkschiebtüranordnung einen weiteren Türflügel zum Öffnen und Verschließen der Türöffnung aufweist, dass der weitere Türflügel zwischen einer Schließstellung und einer Verschiebestellung verstellt werden kann, dass der weitere Türflügel in der Schließstellung gemeinsam mit dem Türflügel in der Schließstellung die Türöffnung abdeckt und dass die X-Andrückvorrichtung den Türflügel in der Schließstellung gegen den weiteren Türflügel in der Schließstellung drückt. Ebenso kann es sein, dass die Schwenkschiebetüranordnung ein Portal zum Begrenzen der Türöffnung aufweist und dass die X-Andrückvorrichtung den Türflügel in der Schließstellung gegen das Portal drückt. Bei diesem Portal handelt sich also um eine beliebige Struktur, welche ganz oder teilweise die Begrenzung der Türöffnung bildet.

Die erfindungsgemäße Schwenkschiebetüranordnung ist dadurch gekennzeichnet, dass der Türflügel eine Öffnung zur Aufnahme der Y-Fixierungsvorrichtung aufweist und dass zum Eingriff mit dem Türflügel die Y-Fixierungsvorrichtung in die Öffnung verstellt wird. Mit anderen Worten bewegt sich die Y-Fixierungsvorrichtung in die Öffnung, um mit dem Türflügel in Eingriff zu kommen. Dabei erfolgt die Verstellung der Y-Fixierungsvorrichtung durch eine Betätigung des Drehsäulenhebels, welche Betätigung wiederum durch ein Verschwenken der Drehsäule bewirkt werden kann. Hier ist es bevorzugt, dass die Öffnung in einem Endbereich des Linearlagers und benachbart zu dem Linearlager angeordnet ist.

Die erfindungsgemäße Schwenkschiebetüranordnung ist weiter dadurch gekennzeichnet, dass die Y-Fixierungsvorrichtung einen Haken für den Eingriff mit dem Türflügel aufweist und dass beim Eingriff der Y-Fixierungsvorrichtung der Haken einen Eingriffsrand der Öffnung hintergreift. Der Eingriff kann also speziell zwischen dem Haken und dem Eingriffsrand der Öffnung bestehen. Indem der Eingriffsrand einen Rand der Öffnung in Verschieberichtung bildet, kann durch den Eingriff der Y-Fixierungsvorrichtung mit dem Eingriffsrand die Fixierung in der Verschieberichtung bewirkt werden. Zwischen dem Haken und dem Eingriffsrand kann durch den Eingriff ein Formschluss in Verschieberichtung bestehen. Erfindungsgemäß hintergreift der Haken den Eingriffsrand der Öffnung zum Andrücken des Türflügels entlang der X-Richtung. Folglich kann die X-Andrückvorrichtung den Haken umfassen.

Gemäß einer bevorzugten Ausführungsform ist vorgesehen, dass die Öffnung ein Langloch ist, welches entlang der Verschieberichtung ausgerichtet ist. Dabei ist vorzugsweise die Öffnung unterhalb des Linearlagers angeordnet.

Eine bevorzugte Ausführungsform ist dadurch gekennzeichnet, dass den Eingriffsrand begrenzende Nebenränder der Öffnung durch einen Formschluss mit dem Haken eine Relativbewegung des Hakens zu der Öffnung quer zu der Verschieberichtung, insbesondere entlang beider Ausrichtungen der Z-Richtung, blockieren. Bei diesen Nebenrändern handelt es sich um Ränder der Öffnung, welche den Eingriffsrand begrenzen und insbesondere winklig - also nicht kollinear - zu dem Eingriffsrand verlaufen. Insbesondere können die Nebenränder im Wesentlichen senkrecht zu dem Eingriffsrand verlaufen. Weiter kann es sein, dass ein Spiel des Hakens in der Öffnung in Z-Richtung kleiner als ein Spiel des Führungselements in dem Linearlager in Z-Richtung ist. Auf diese Weise wird trotz des Vorhandenseins eines Spiels des Hakens in Z-Richtung verhindert, dass das Führungselement aus dem Linearlager austritt.

Eine weitere bevorzugte Ausführungsform ist dadurch gekennzeichnet, dass der Haken an einem Stift des Drehsäulenhebels angeordnet ist. Dabei kann der Haken eine Erstreckung senkrecht zu einer Längsrichtung des Stifts aufweisen. Bevorzugt ist hier weiter, dass der Haken näher an einem türflügelseitigen Ende des Drehsäulenhebels angeordnet ist und insbesondere, dass der Stift vertikal nach unten ausgerichtet ist.

Gemäß einer bevorzugten Ausführungsform ist vorgesehen, dass der Haken im Wesentlichen entlang einer horizontalen Ebene des Fahrzeugs ausgerichtet ist. Soweit der Haken also gebogen ausgestaltet ist, liegt die die Biegung beschreibende Kurve im Wesentlichen in der horizontalen Ebene des Fahrzeugs. Vorzugsweise ist es weiter so, dass der Haken in eine Richtung gebogen ist, welche einer Schwenkrichtung der Drehsäule zum Verstellen des Türflügels in die Schließstellung entspricht. Wenn also die Drehsäule im Uhrzeigersinn geschwenkt wird, um den Türflügel in die Schließstellung zu verstellen, so ist der Haken vorzugsweise ebenfalls im Uhrzeigersinn gebogen und umgekehrt. Der Verweis auf die Schwenkrichtung bzw. die Biegerichtung ist auf die gemeinsame Ebene des Verschwenkens der Drehsäule und der Biegung des Hakens bezogen.

Eine bevorzugte Ausführungsform ist dadurch gekennzeichnet, dass der Drehsäulenhebel schwenkbar an der Drehsäule gelagert ist. Vorzugsweise ist der Drehsäulenhebel mit dem Führungselement in dem Linearlager verstellbar gelagert. Bei dieser Verstellung handelt es sich insbesondere um eine lineare Bewegung in Verschieberichtung. Grundsätzlich kann das Linearlager ein Gleitlager sein, sodass das Führungselement ein Gleitelement zur Lineargleitführung des Türflügels aufweisen kann. Bevorzugt ist, dass das Führungselement ein Wälzelement zur Linearwälzführung des Türflügels aufweist.

Eine weitere bevorzugte Ausführungsform ist dadurch gekennzeichnet, dass das Linearlager ein Längsprofil aufweist. Dabei handelt es sich vorzugsweise um ein längliches Profilelement. Das Linearlager kann auch aus einem solchen Längsprofil bestehen. Bevorzugt ist weiter, dass ein Profilquerschnitt des Längsprofils nur in einer ersten Querrichtung offen ist. Vorzugsweise ist der Profilquerschnitt somit in drei zu dieser Querrichtung senkrecht ausgerichteten Richtungen geschlossen. Das gewährleistet eine sichere Aufnahme des Führungselements in dem Linearlager. Weiter kann es sein, dass das Wälzelement an einer Achse des Drehsäulenhebels drehbar gelagert ist, welche Achse entlang der Querrichtung in das Längsprofil hineinragt und welche Achse an einem türflügelseitigen Ende des Drehsäulenhebels angeordnet ist.

Weitere vorteilhafte und bevorzugte Ausgestaltungen und Merkmale ergeben sich aus der nachfolgenden Beschreibung mit Bezug auf die Figuren. In der lediglich ein Ausführungsbeispiel wiedergebenden Zeichnung zeigt
- Fig. 1: eine Ansicht einer erfindungsgemäßen Schwenkschiebetüranordnung aus einer Innenrichtung des Fahrzeugs,
- Fig. 2: eine Perspektivansicht der Schwenkschiebetüranordnung der Fig. 1 aus einer schräg unteren Innenrichtung des Fahrzeugs,
- Fig. 3: eine obere Schnittansicht der Schwenkschiebetüranordnung der Fig. 1 und
- Fig. 4: eine Schnittansicht der Schwenkschiebetüranordnung der Fig. 1 quer zu einer Längsrichtung des Fahrzeugs.

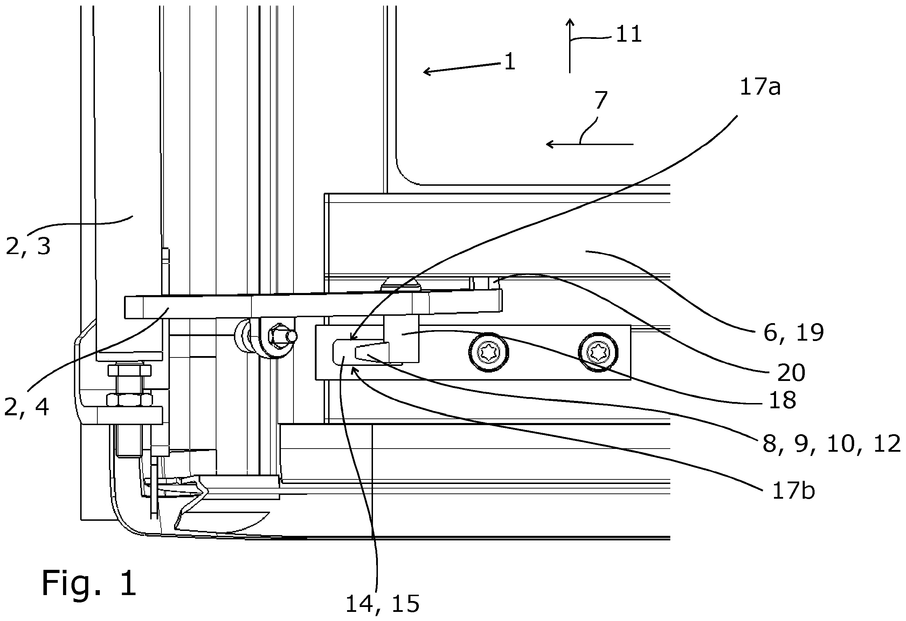

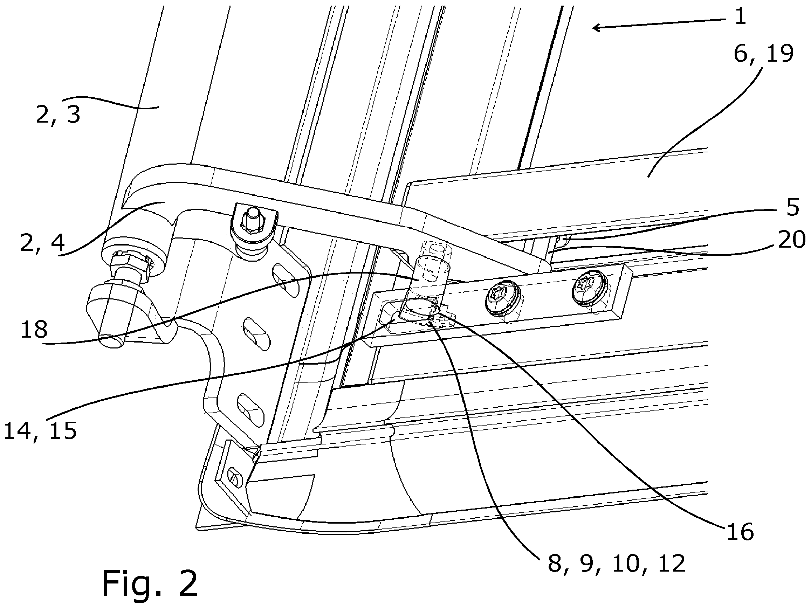

Die Schwenkschiebetüranordnung der Fig. 1 bis 4 ist für ein hier nicht dargestelltes Fahrzeug. Sie weist einen Türflügel 1 auf, welcher sich in der Darstellung der Fig. 1 bis 4 in einer Schließstellung befindet und eine - hier ebenfalls nicht als solche insgesamt dargestellte - Türöffnung verschließt. Die Schwenkschiebetüranordnung weist ferner eine Drehsäulenanordnung 2 auf, mit welcher der Türflügel zwischen dieser Schließstellung und einer - hier nicht dargestellten - Verschiebestellung verstellt werden kann. Hierzu weist die Drehsäulenanordnung 2 eine Drehsäule 3, von welcher nur der untere Teil dargestellt ist, und einen Drehsäulenhebel 4 auf. Der Drehsäulenhebel 4 ist an seinem drehsäulenseitigen Ende schwenkbar an der Drehsäule 3 gelagert und weist an seinem türflügelseitigen Ende ein Führungselement 5 auf. Bei diesem Führungselement 5 handelt es sich um eine Führungsrolle mit vertikaler Drehachse, welche in ein Linearlager 6 des Türflügels 1 eingreift. Dieser Eingriff dient der Linearführung des Türflügels 1 in eine horizontale Verschieberichtung 7, welche Verschieberichtung 7 auch als Y-Richtung bezeichnet werden kann und welche der Fahrtrichtung des Fahrzeugs entspricht. Der Drehsäulenhebel 4 weist eine Y-Fixierungsvorrichtung 8 auf, welche den Türflügel 1 in der Verschieberichtung 7 fixiert und dazu mit dem Türflügel 1 in formschlüssigem Eingriff steht.

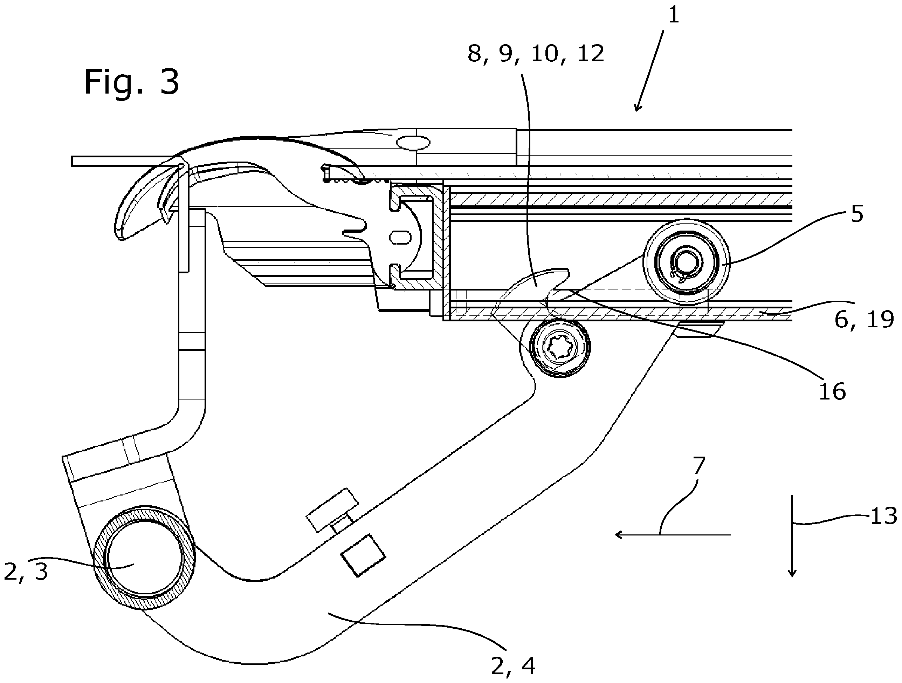

Erkennbar ist, dass eine Verschiebung des Türflügels in die Verschieberichtung 7 gemäß der Darstellung der Fig. 1 und der Fig. 3 durch diesen Eingriff blockiert wird. Bei der Y-Fixierungsvorrichtung 8 handelt es sich vorliegend um einen Haken 9. Ebenso ist erkennbar, dass ein Verschwenken der Drehsäule 3 entgegen dem Uhrzeigersinn gemäß der Darstellung der Fig. 3 durch die resultierende Betätigung des Drehsäulenhebels 4 den Haken 9 außer Eingriff mit dem Türflügel 1 bringt und den Türflügel 1 in die Verschiebestellung verstellt. Dabei verläuft insoweit dieser Richtung entgegengesetzt die Biegung des Hakens im Uhrzeigersinn gemäß der Darstellung der Fig. 3.

Der Haken 9 bildet gleichzeitig eine Z-Fixierungsvorrichtung 10. In vertikaler, und zwar sowohl oberer als auch unterer Z-Richtung 11 kommt der Haken 9 mit dem Türflügel 1 in Eingriff, sodass entlang der Z-Richtung 11 durch einen Formschluss des Hakens 9 mit dem Türflügel 1 eine Begrenzung der Bewegung des Türflügels 1 erreicht wird. Erkennbar ist, dass gemäß der Darstellung der Fig. 1 bis 4 ein Spiel entlang der Z-Richtung 11 zwischen dem Haken 9 und dem Türflügel 1 vorhanden ist, sodass der obige Eingriff ggf. erst nach einem gewissen Verstellweg des Türflügels 1 erfolgt.

Ebenso bildet der Haken 9 eine X-Andrückvorrichtung 12, da der Eingriff des Hakens 9 mit dem Türflügel 1 erkennbar den Türflügel 1 entlang einer X-Richtung 13 andrückt, welche X-Richtung 13 quer sowohl zu der Verschieberichtung 7 als auch zu der Y-Richtung 11 verläuft. Auf diese Weise wird der Türflügel sowohl gegen einen hier nicht dargestellten weiteren Türflügel als auch gegen ein hier ebenfalls nicht dargestelltes Portal zum Begrenzen der Türöffnung gedrückt.

Bezüglich des Eingriffs des Hakens 9 mit dem Türflügel 1 ist zu erkennen, dass der Türflügel 1 eine Öffnung 14 zur Aufnahme der Y-Fixierungsvorrichtung 10 aufweist, bei welcher es sich um ein unterhalb des Linearlagers 6 in einem Endbereich des Linearlagers 6 angeordnetes und entlang der Verschieberichtung 11 ausgerichtetes Langloch 15 handelt. Das oben beschriebene Verschwenken der Drehsäule 3 betätigt den Drehsäulenhebel 4 derart, dass der Haken 9 in das Langloch 15 verstellt wird. Dabei hintergreift der Haken 9 speziell einen Eingriffsrand 16 des Langlochs 15. Der Formschluss des Hakens 9 zur Fixierung in der Z-Richtung 11 erfolgt mit Nebenrändern 17a, b des Langlochs 15, welche den Eingriffsrand 15 jeweils vertikal oben und unten begrenzen.

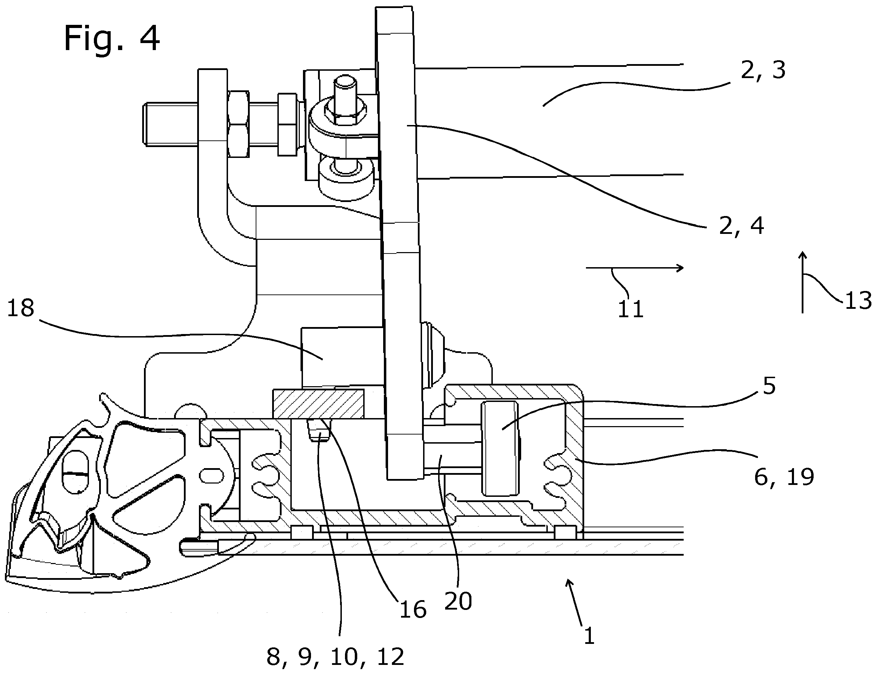

Der Haken 9 ist an einem vertikal nach unten ausgerichteten Stift 18 des Drehsäulenhebels 4 angeordnet. Bei dem Linearlager 6 handelt es sich vorliegend um ein Längsprofil 19, welches - wie insbesondere aus der Fig. 4 erkennbar - nur in vertikal unterer Z-Richtung 11 offen ist. Das Führungselement 5 ist an einer Achse 20 des Drehsäulenhebels 4 drehbar gelagert, welche sich entlang dieser Z-Richtung 11 in das Längsprofil 19 erstreckt.

## Patentansprüche

1. Schwenkschiebetüranordnung für ein Fahrzeug mit einem Türflügel (1) zum Öffnen und Verschließen einer Türöffnung und mit einer Drehsäulenanordnung (2) zum Verstellen des Türflügels (1) zwischen einer Schließstellung und einer Verschiebestellung, wobei die Drehsäulenanordnung (2) eine zum Verstellen des Türflügels (1) schwenkbare Drehsäule (3) und einen Drehsäulenhebel (4) zum Koppeln der Drehsäule (3) mit dem Türflügel (1) aufweist, wobei der Türflügel (1) ein Linearlager (6) aufweist, in welches ein Führungselement (5) des Drehsäulenhebels (4) zur Linearführung des Türflügels (1) in einer Verschieberichtung (7) eingreift, wobei der Türflügel (1) in der Schließstellung die Türöffnung verschließt und in der Verschiebestellung zum Öffnen der Türöffnung entlang der Verschieberichtung (7) verschoben werden kann und wobei der Drehsäulenhebel (4) eine Y-Fixierungsvorrichtung (8) aufweist, welche zum Fixieren des Türflügels (1) in der Verschieberichtung (7) mit dem Türflügel (1) in der Schließstellung des Türflügels (1) in Eingriff steht, **dadurch gekennzeichnet, dass** der Türflügel (1) eine Öffnung (14) zur Aufnahme der Y-Fixierungsvorrichtung (10) aufweist, dass zum Eingriff mit dem Türflügel (1) die Y-Fixierungsvorrichtung (10) durch eine Betätigung des Drehsäulenhebels (4) in die Öffnung (14) verstellt wird, dass die Y-Fixierungsvorrichtung (10) einen Haken (9) für den Eingriff mit dem Türflügel (1) aufweist und dass beim Eingriff der Y-Fixierungsvorrichtung (10) der Haken (9) einen Eingriffsrand (16) der Öffnung (14) zum Andrücken des Türflügels (1) entlang einer X-Richtung (13) hintergreift.

2. Schwenkschiebetüranordnung nach Anspruch 1, **dadurch gekennzeichnet, dass** die Verschieberichtung (7) bezogen auf das Fahrzeug horizontal verläuft, insbesondere, dass die Verschieberichtung (7) kollinear zu einer Fahrtrichtung des Fahrzeugs verläuft.

3. Schwenkschiebetüranordnung nach Anspruch 1 oder 2, **dadurch gekennzeichnet, dass** die Y-Fixierungsvorrichtung (7) in der Verschiebestellung des Türflügels (1) außer Eingriff mit dem Türflügel (1) steht, vorzugsweise, dass die Y-Fixierungsvorrichtung (7) durch Verschwenken der Drehsäule (3) mit dem Türflügel (1) wechselweise in und außer Eingriff gebracht werden kann.

4. Schwenkschiebetüranordnung nach einem der Ansprüche 1 bis 3, **dadurch gekennzeichnet, dass** die Drehsäulenanordnung (2) eine Z-Fixierungsvorrichtung (10) aufweist, welche zum Begrenzen einer Bewegung des Türflügels (1) in einer Z-Richtung (11) quer zu der Verschieberichtung (7) mit dem Türflügel (1) in der Schließstellung des Türflügels (1) in Eingriff kommt, vorzugsweise, dass die Z-Richtung (11) bezogen auf das Fahrzeug vertikal verläuft, insbesondere dass die Z-Fixierungsvorrichtung (10) zum Begrenzen einer Bewegung des Türflügels (1) in einer oberen Z-Richtung und einer unteren Z-Richtung mit dem Türflügel (1) in Eingriff kommt.

5. Schwenkschiebetüranordnung nach Anspruch 4, **dadurch gekennzeichnet, dass** die Y-Fixierungsvorrichtung (8) die Z-Fixierungsvorrichtung (11) umfasst, insbesondere, dass der Eingriff der Y-Fixierungsvorrichtung (8) mit dem Türflügel (1) den Türflügel (1) in der Z-Richtung (11) fixiert.

6. Schwenkschiebetüranordnung nach einem der Ansprüche 1 bis 5, **dadurch gekennzeichnet, dass** die Drehsäulenanordnung eine X-Andrückvorrichtung (12) aufweist, welche mit dem Türflügel (1) in der Schließstellung des Türflügels (1) zum Andrücken des Türflügels (1) entlang der X-Richtung (13) in Eingriff steht, vorzugsweise, dass die X-Richtung (13) senkrecht zu der Verschieberichtung (7) und senkrecht zu der Z-Richtung (11) verläuft, insbesondere, dass die X-Richtung (13) bezogen auf das Fahrzeug horizontal verläuft.

7. Schwenkschiebtüranordnung nach Anspruch 6, **dadurch gekennzeichnet, dass** die Schwenkschiebtüranordnung einen weiteren Türflügel zum Öffnen und Verschließen der Türöffnung aufweist, dass der weitere Türflügel zwischen einer Schließstellung und einer Verschiebestellung verstellt werden kann, dass der weitere Türflügel in der Schließstellung gemeinsam mit dem Türflügel (1) in der Schließstellung die Türöffnung abdeckt und dass die X-Andrückvorrichtung (12) den Türflügel (1) in der Schließstellung gegen den weiteren Türflügel in der Schließstellung drückt, vorzugsweise, dass die Schwenkschiebetüranordnung ein Portal zum Begrenzen der Türöffnung aufweist und dass die X-Andrückvorrichtung den Türflügel (1) in der Schließstellung gegen das Portal drückt.

8. Schwenkschiebetüranordnung nach einem der Ansprüche 1 bis 7, **dadurch gekennzeichnet, dass** die Öffnung (14) in einem Endbereich des Linearlagers (6) und benachbart zu dem Linearlager (6) angeordnet ist.

9. Schwenkschiebetüranordnung nach einem der Ansprüche 1 bis 8, **dadurch gekennzeichnet, dass** die Öffnung (14) ein Langloch (15) ist, welches entlang der Verschieberichtung (11) ausgerichtet ist, vorzugsweise, dass die Öffnung (14) unterhalb des Linearlagers (6) angeordnet ist.

10. Schwenkschiebetüranordnung nach einem der Ansprüche 1 bis 9, **dadurch gekennzeichnet, dass** den Eingriffsrand (16) begrenzende Nebenränder (17a, b) der Öffnung (14) durch einen Formschluss mit dem Haken (9) eine Relativbewegung des Hakens (9) zu der Öffnung (14) quer zu der Verschieberichtung (7), insbesondere entlang beider Ausrichtungen der Z-Richtung (11), blockieren, insbesondere, dass ein Spiel des Hakens (9) in der Öffnung (14) in Z-Richtung (11) kleiner als ein Spiel des Führungselements (5) in dem Linearlager (6) in Z-Richtung (11) ist.

11. Schwenkschiebetüranordnung nach einem der Ansprüche 1 bis 10, **dadurch gekennzeichnet, dass** der Haken (9) an einem Stift (18) des Drehsäulenhebels (4) angeordnet ist, vorzugsweise, dass der Haken (9) näher an einem türflügelseitigen Ende des Drehsäulenhebels (4) angeordnet ist, insbesondere, dass der Stift (18) vertikal nach unten ausgerichtet ist.

12. Schwenkschiebetüranordnung nach einem der Ansprüche 1 bis 11, **dadurch gekennzeichnet, dass** der Haken (9) im Wesentlichen entlang einer horizontalen Ebene des Fahrzeugs ausgerichtet ist, vorzugsweise dass der Haken (9) in eine Richtung gebogen ist, welche einer Schwenkrichtung der Drehsäule (3) zum Verstellen des Türflügels (1) in die Schließstellung entspricht.

13. Schwenkschiebetüranordnung nach einem der Ansprüche 1 bis 12, **dadurch gekennzeichnet, dass** der Drehsäulenhebel (4) schwenkbar an der Drehsäule (3) gelagert ist, vorzugsweise, dass der Drehsäulenhebel (4) mit dem Führungselement (5) in dem Linearlager (6) verstellbar gelagert ist, insbesondere, dass das Führungselement (5) ein Wälzelement zur Linearwälzführung des Türflügels (1) aufweist.

14. Schwenkschiebetüranordnung nach Anspruch 13, **dadurch gekennzeichnet, dass** das Linearlager (6) ein Längsprofil (19) aufweist, vorzugsweise, dass ein Profilquerschnitt des Längsprofils (19) nur in einer ersten Querrichtung offen ist, insbesondere, dass das Wälzelement an einer Achse (20) des Drehsäulenhebels (4) drehbar gelagert ist, welche Achse (20) entlang der Querrichtung in das Längsprofil (19) hineinragt und an einem türflügelseitigen Ende des Drehsäulenhebels (4) angeordnet ist.

## Claims

1. A pivot sliding door assembly for a vehicle with a door leaf (1) for the opening and closing of a door opening and with a rotary column assembly (2) for moving the door leaf (1) between a closed position and a displacement position, wherein the rotary column assembly (2) has a pivotable rotary column (3) for moving the door leaf (1) and a rotary column lever (4) for coupling the rotary column (3) with the door leaf (1), wherein the door leaf (1) has a linear bearing (6), into which a guiding element (5) of the rotary column lever (4) engages for the linear guidance of the door leaf (1) in a displacement direction (7), wherein the door leaf (1), in the closed position, closes off the door opening and, in the displacement position for opening the door opening, can be displaced along the displacement direction (7), and wherein the rotary column lever (4) has a Y-direction fixing device (8) which, for fixing the door leaf (1) in the displacement direction (7), is in engagement with the door leaf (1) in the closed position of the door leaf (1), **characterized in that** the door leaf (1) has an opening (14) for receiving the Y-direction fixing device (10), that for engagement with the door leaf (1) the Y-direction fixing device (10) is moved into the opening (14) by an actuation of the rotary column lever (4), that the Y-direction fixing device (10) has a hook (9) for the engagement with the door leaf (1), and that on engagement of the Y-direction fixing device (10), the hook (9) engages behind an engagement edge (16) of the opening (14) for pressing on of the door leaf (1) along an X-direction (13).

2. The pivot sliding door assembly according to Claim 1, **characterized in that** the displacement direction (7) runs horizontally in relation to the vehicle, in particular that the displacement direction (7) runs in a collinear manner to a direction of travel of the vehicle.

3. The pivot sliding door assembly according to Claim 1 or 2, **characterized in that** the Y-direction fixing device (7), in the displacement position of the door leaf (1), is out of engagement with the door leaf (1), preferably that the Y-direction fixing device (7) can be brought alternately into and out of engagement with the door leaf (1) by pivoting of the rotary column (3).

4. The pivot sliding door assembly according to one of Claims 1 to 3, **characterized in that** the rotary column assembly (2) has a Z-direction fixing device (10) which, for delimiting a movement of the door leaf (1) in a Z-direction (11) transversely to the displacement direction (7), comes in engagement with the door leaf (1) in the closed position of the door leaf (1), preferably that the Z-direction (11) runs vertically in relation to the vehicle, in particular that the Z-direction fixing device (10) comes in engagement with the door leaf (1) for delimiting a movement of the door leaf (1) in an upper Z-direction and in a lower Z-direction.

5. The pivot sliding door assembly according to Claim 4, **characterized in that** the Y-direction fixing device (8) comprises the Z-direction fixing device (11), in particular that the engagement of the Y-direction fixing device (8) with the door leaf (1) fixes the door leaf (1) in the Z-direction (11).

6. The pivot sliding door assembly according to one of Claims 1 to 5, **characterized in that** the rotary column assembly has an X-direction pressing device (12), which is in engagement with the door leaf (1) in the closed position of the door leaf (1) for the pressing on of the door leaf (1) along the X-direction (13), preferably that the X-direction (13) runs perpendicularly to the displacement direction (7) and perpendicularly to the Z-direction (11), in particular that the X-direction (13) runs horizontally in relation to the vehicle.

7. The pivot sliding door assembly according to Claim 6, **characterized in that** the pivot sliding door assembly has a further door leaf for opening and closing the door opening, that the further door leaf can be moved between a closed position and a displacement position, that the further door leaf, in the closed position together with the door leaf (1) in the closed position, covers the door opening and that the X-direction pressing device (12) presses the door leaf (1) in the closed position against the further door leaf in the closed position, preferably that the pivot sliding door assembly has a portal for delimiting the door opening and that the X-direction pressing device presses the door leaf (1) in the closed position against the portal.

8. The pivot sliding door assembly according to one of Claims 1 to 7, **characterized in that** the opening (14) is arranged in an end region of the linear bearing (6) and adjacent to the linear bearing (6).

9. The pivot sliding door assembly according to one of Claims 1 to 8, **characterized in that** the opening (14) is an elongated hole (15) which is aligned along the displacement direction (11), preferably that the opening (14) is arranged beneath the linear bearing (6).

10. The pivot sliding door assembly according to one of Claims 1 to 9, **characterized in that** sub-edges (17a, b) of the opening (14), delimiting the engagement edge (16), through a form fit with the hook (9) block a relative movement of the hook (9) to the opening (14) transversely to the displacement direction (7), in particular along both alignments of the Z-direction (11), in particular that a clearance of the hook (9) in the opening (14) in Z-direction (11) is smaller than a clearance of the guiding element (5) in the linear bearing (6) in Z-direction (11).

11. The pivot sliding door assembly according to one of Claims 1 to 10, **characterized in that** the hook (9) is arranged on a pin (18) of the rotary column lever (4), preferably that the hook (9) is arranged nearer at an end of the rotary column lever (4) on the door leaf side, in particular that the pin (18) is aligned vertically downwards.

12. The pivot sliding door assembly according to one of Claims 1 to 11, **characterized in that** the hook (9) is aligned substantially along a horizontal plane of the vehicle, preferably that the hook (9) is bent in a direction which corresponds to a pivoting direction of the rotary column (3) for moving the door leaf (1) into the closed position.

13. The pivot sliding door assembly according to one of Claims 1 to 12, **characterized in that** the rotary column lever (4) is mounted pivotably on the rotary column (3), preferably that the rotary column lever (4) is movably mounted with the guiding element (5) in the linear bearing (6), in particular that the guiding element (5) has a rolling element for the linear rolling guidance of the door leaf (1).

14. The pivot sliding door assembly according to Claim 13, **characterized in that** the linear bearing (6) has a longitudinal profile (19), preferably that a profile cross-section of the longitudinal profile (19) is open only in a first transverse direction, in particular that the rolling element is rotatably mounted on an axis (20) of the rotary column lever (4), which axis (20) projects into the longitudinal profile (19) along the transverse direction and is arranged at an end of the rotary column lever (4) on the door leaf side.

## Revendications

1. Agencement de porte pivotante coulissante pour un véhicule avec un battant de porte (1) pour ouvrir et fermer une ouverture de porte et avec un agencement de colonne rotative (2) pour déplacer le battant de porte (1) entre une position de fermeture et une position de déplacement, sachant que l' agencement de colonne rotative (2) comporte une colonne rotative (3) pivotable pour déplacer le battant de porte (1) et un levier de colonne rotative (4) pour coupler la colonne rotative (3) au battant de porte (1), sachant que le battant de porte (1) comporte un support linéaire (6) dans lequel vient en prise un élément de guidage (5) du levier de colonne rotative (4) pour le guidage linéaire du battant de porte (1) dans une direction de déplacement (7), sachant que le battant de porte (1) ferme dans la position de fermeture l'ouverture de porte et peut être déplacé le long de la direction de déplacement (7) dans la position de déplacement pour ouvrir l'ouverture de porte et sachant que le levier de colonne rotative (4) comporte un dispositif de fixation Y (8), lequel se trouve en prise avec le battant de porte (1) dans la position de fermeture du battant de porte (1) pour fixer le battement de porte (1) dans la direction de déplacement (7), ***caractérisé en ce que*** le battant de porte (1) comporte une ouverture (14) pour recevoir le dispositif de fixation Y (10), **en ce *que*** le dispositif de fixation Y (10) est déplacé dans l'ouverture (14) pour venir en prise avec le battant de porte (1) par un actionnement du levier de colonne rotative (4), ***en ce que*** le dispositif de fixation Y (10) comporte un crochet (9) pour la mise en prise avec le battant de porte (1) et ***en ce que*** lors de la mise en prise du dispositif de fixation Y (10), le crochet (9) vient saisir par l'arrière un bord de prise (16) de l'ouverture (14) pour appliquer le battant de porte (1) le long d'une direction X (13).

2. Agencement de porte pivotante coulissante selon la revendication 1, ***caractérisé en ce que*** la direction de déplacement (7) passe horizontalement par rapport au véhicule, en particulier, ***en ce que*** la direction de déplacement (7) passe de façon colinéaire à une direction de marche du véhicule.

3. Agencement de porte pivotante coulissante selon la revendication 1 ou 2, ***caractérisé en ce que*** le dispositif de fixation Y (7) ne se trouve plus dans la position de déplacement du battant de porte (1) plus en engagement avec le battant de porte (1), de préférence, ***en ce que*** le dispositif de fixation Y (7) peut être alternativement placé en prise ou non engagé avec le battant de porte (1) par pivotement de la colonne rotative (3).

4. Agencement de porte pivotante coulissante selon l'une quelconque des revendications 1 à 3, ***caractérisé en ce que*** l'agencement de colonne rotative (2) comporte un dispositif de fixation Z (10), lequel vient en prise avec le battant de porte (1) dans la position de fermeture du battant de porte (1) pour limiter un mouvement du battant de porte (1) dans une direction Z (11) transversalement à la direction de déplacement (7), de préférence, ***en ce que*** la direction Z (11) passe verticalement par rapport au véhicule, en particulier, ***en ce que*** le dispositif de fixation Z (10) vient en prise avec le battant de porte (1) pour limiter un mouvement du battant de porte (1) dans une direction Z supérieure et une direction Z inférieure.

5. Agencement de porte pivotante coulissante selon la revendication 4, ***caractérisé en ce que*** le dispositif de fixation Y (8) comprend le dispositif de fixation Z (11), en particulier, ***en ce que*** la mise en prise du dispositif de fixation Y (8) avec le battant de porte (1) fixe le battant de porte (1) dans la direction Z (11).

6. Agencement de porte pivotante coulissante selon l'une quelconque des revendications 1 à 5, ***caractérisé en ce que*** l'agencement de colonne rotative comporte un dispositif de pression X (12), lequel vient en prise avec le battant de porte (1) dans la position de fermeture du battant de porte (1) pour appliquer le battant de porte (1) le long de la direction X (13), de préférence, ***en ce que*** la direction X (13) passe perpendiculairement à la direction de déplacement (7) et perpendiculairement à la direction Z (11), en particulier, ***en ce que*** la direction X (13) passe horizontalement par rapport au véhicule.

7. Agencement de porte pivotante coulissante selon la revendication 6, ***caractérisé en ce que*** l'agencement de porte pivotant coulissante comporte un autre battant de porte pour ouvrir et fermer l'ouverture de porte, ***en ce que*** l'autre battant de porte peut être déplacé entre une position de fermeture et une position de déplacement, ***en ce que*** l'autre battant de porte dans la position de fermeture couvre l'ouverture de porte dans la position de fermeture en commun avec le battant de porte (1) dans la position de fermeture et ***en ce que*** le dispositif de pression X (12) appuie le battant de porte (1) dans la position de fermeture contre l'autre battant de porte dans la position de fermeture, de préférence, ***en ce que*** l'agencement de porte pivotant coulissante comporte un cadre pour limiter l'ouverture de porte et ***en ce que*** le dispositif de pression X appuie le battant de porte (1) dans la position de fermeture contre le cadre.

8. Agencement de porte pivotante coulissante selon l'une quelconque des revendications 1 à 7, ***caractérisé en ce que*** l'ouverture (14) est disposée dans une zone d'extrémité du support linéaire (6) et à proximité du support linéaire (6).

9. Agencement de porte pivotante coulissante selon l'une quelconque des revendications 1 à 8, ***caractérisé en ce que*** l'ouverture (14) est un trou oblong (15), lequel est orienté le long de la direction de déplacement (11), de préférence, ***en ce que*** l'ouverture (14) est disposée en dessous du support linéaire (6).

10. Agencement de porte pivotante coulissante selon l'une quelconque des revendications 1 à 9, ***caractérisé en ce que*** des bords secondaires (17a, b) de l'ouverture (14), délimitant le bord de prise (16), bloquent par une conformité de forme avec le crochet (9) un mouvement relatif du crochet (9) vers l'ouverture (14) transversalement à la direction de déplacement (7), en particulier le long des deux orientations de la direction Z (11), en particulier, ***en ce qu***'un jeu du crochet (9) dans l'ouverture (14) en direction Z (11) est plus petit qu'un jeu de l'élément de guidage (5) dans le support linéaire (6) en direction Z (11).

11. Agencement de porte pivotante coulissante selon l'une quelconque des revendications 1 à 10, ***caractérisé en ce que*** le crochet (9) est disposé sur une tige (18) du levier de colonne rotative (4), de préférence, ***en ce que*** le crochet (9) est disposé plus près sur une extrémité du côté battant de porte du levier de colonne rotative (4), en particulier, ***en ce que*** la tige (18) est orientée verticalement vers le bas.

12. Agencement de porte pivotante coulissante selon l'une quelconque des revendications 1 à 11, ***caractérisé en ce que*** le crochet (9) est orienté pour l'essentiel le long d'un plan horizontal du véhicule, de préférence, ***en ce que*** le crochet (9) est courbé dans une direction, laquelle correspond à une direction de pivotement de la colonne rotative (3) pour déplacer le battant de porte (1) dans la position de fermeture.

13. Agencement de porte pivotante coulissante selon l'une quelconque des revendications 1 à 12, ***caractérisé en ce que*** le levier de colonne rotative (4) est logé pouvant pivoter sur la colonne rotative (3), de préférence, ***en ce que*** le levier de colonne rotative (4) avec l'élément de guidage (5) est logé de façon mobile dans le support linéaire (6), en particulier, ***en ce que*** l'élément de guidage (5) comporte un élément à roulements pour le guidage à roulements linéaire du battant de porte (1).

14. Agencement de porte pivotante coulissante selon la revendication 13, ***caractérisé en ce que*** le support linéaire (6) comporte un profilé longitudinal (19), de préférence, ***en ce qu***'une section profilée du profilé longitudinal (19) n'est ouverte que dans une première direction transversale, en particulier, ***en ce que*** l'élément à roulements est logé pouvant tourner sur un axe (20) du levier de colonne rotative (4), lequel axe (20) dépasse le long de la direction transversale dans le profilé longitudinal (19) et est disposé sur une extrémité côté battant de porte du levier de colonne rotative (4).
